# EUROPEAN PATENT APPLICATION

(11) **EP 3 421 223 A1**
(43) Date of publication of application: **02.01.2019**
(21) Application number: 18190088.7
(22) Date of filing: 01.06.2016
(51) Int. Cl.: B29C 63/02, B63B 59/04, B29L 31/30

(54) **LARGE SURFACE LAMINATING SYSTEM AND METHOD**

(30) Priority: 05.06.2015 EP 15170912
(62) Divisional of application: 16727670.8
(71) Applicant: PPG Coatings Europe B.V., 1047 BB Amsterdam (NL); Avery Dennison Materials Belgium Sprl, 7060 Soignies (BE)
(72) Inventor: BROUWERS, Bouke Jan, 8100 AB Raalte (NL); PEROTTI, Daniele, 6020 Dampremy (BE); KRUIPER, Edwin Johannes Gerardus, 8100 AB Raalte (NL); DE BOER, Jan, 1827 NB Alkmaar (NL)
(74) Representative: Appleyard Lees IP LLP

(57) **Abstract**

There is provided a laminating system comprising a laminating module and a transportation module wherein the transportation module is arranged to automatically drive the laminating module over a surface to be laminated. Here the surface to be laminated is large and maintained substantially stationary. The transportation module includes a retaining means and a drive means. The retaining means resists movement of the laminating module relative to the surface except when the laminating module is driven by the drive means. The laminating module includes an unwind unit adapted to receive a roll of laminate. The laminate comprises an adhesive film and first release layer. The unwind unit is adapted to allow the laminate to be unwound from the roll. A first release layer discard unit is provided. The first release layer discard unit is adapted to remove the first release layer from the laminate. The laminating module includes a first pressing unit. The first pressing unit is adapted to press the film onto the surface. Here, the retaining means is adapted to resist a pressing force applied by the first pressing unit and acting to move the laminating module away from the surface. As the transportation module automatically drives the laminating module over the surface, the pressing unit presses the film to the surface.

## Description

The present invention relates to a laminating system and method suitable for laminating large surfaces, and in particular, to vertical surfaces such as a ship's hull and land storage tanks.

Various marine coatings are known to prevent or deter the adhesion of marine organisms to submarine structures such as a ship's hull. Marine coatings are generally divided into erodible and fouling release coatings. Erodible coating compositions may be self-polishing or ablative. Erodible coatings may include a biocide which serves to poison or deter the organism. Such coatings may also be designed to slowly degrade or erode over time, thus organisms adhered to the surface will also gradually fall off the surface with the degradation of the coating or via concomitant release of biocide. Fouling release coatings have a different mode of operation. They effectively provide a low surface energy or non-stick surface thus preventing adhesion of organisms.

The application of marine coatings to substrates often involves several stages of surface preparations such as abrasion and cleaning followed by priming, optional build coats, tie-coats and top coats. In addition, application of fouling release top-coats are particularly problematic due to their low surface energy which can be the cause of contamination to neighboring projects where substrate adhesion or intercoat adhesion is important.

Applying such paints in ship yards is therefore problematic as the paint material need to be prevented from contacting certain other surfaces during all stages of the application.

Pressure Sensitive Adhesive Foils (PSA-Foils) for application to surfaces are known. Advantageously, such a coated foil could be prepared off-site to prevent contamination of non-target substrates. In addition, such foils can include multiple layers and are more convenient allowing a single stage application of the finished foil to the underlying substrate and avoiding the need for multiple coat applications. However, such foils are difficult to apply to large, vertical surfaces such as a ship's hull. In addition, such surfaces are often imperfect and in any case can include surface protrusions such as fixings and rivets. Paint applied to such surfaces easily coats over the imperfect surfaces but a foil may leave voids under the surface of the foil.

It is an object of the present invention to attempt to overcome one or more of the above or other disadvantages. It is a further aim to provide a system and method for laminating a surface with a laminate that comprises an anti-fouling characteristic. It is a further aim to provide a laminating system and method that laminates a surface having surface irregularities with reduced voiding.

According to the present invention there is provided a laminating system and laminating method as set forth in the appended claims. Other features of the invention will be apparent from the dependent claims, and the description which follows.

In certain embodiments, a laminate is used including a coating layer with fouling release and/or antifouling properties. The laminate suitably includes a lower adhesive layer for bonding to a surface being laminated. Suitably, the adhesive layer is pressure sensitive adhesive and can be activated by heating. The laminate is applied to the surface in a laminating step in situ, wherein the laminating step replaces one, typically, more than one painting step. Suitably, the laminate is provided in roll form and includes a lower release layer protecting the adhesive. The lower release layer is generally removed and discarded from the laminate prior to laminating the surface. An upper release layer may also be provided to protect the finished coating. In this case, the upper release layer is also removed and discarded. A thermoplastic substrate is suitably used to carry the layers including the fouling release and/or anti-fouling coating layer. Advantageously, the laminate can be formed in a suitable manufacturing environment where the application of the anti-fouling coating can be more easily controlled. The laminating process can then replace several steps in the painting process, thereby reducing the risks of contamination by coating material on other surfaces.

Whilst the embodiments will be described herein in relation to laminating a fouling release and/or anti-fouling coating to the surface, it is envisaged that the laminating system and process would also be useful for replacing other surface coating steps by appropriate adaption of the laminate. References to the antifouling and/or fouling release coating layer of a laminate herein include all the coats that may comprise the coating layer such as primer and/or tie and/or build coat(s) in addition to fouling release and/or antifouling coat(s) as is known in the art.

In certain embodiments, there is provided a laminating system comprising a laminating module and a transportation module wherein the transportation module is arranged to automatically drive the laminating module over a surface to be laminated. Here the surface to be laminated is large and maintained substantially stationary. That is, the surface is larger than the laminating system. The transportation module includes a retaining means and a drive means. The retaining means resists movement of the laminating module relative to the surface except when the laminating module is driven by the drive means. The laminating module includes an unwind unit adapted to receive a roll of laminate. The laminate comprises an adhesive film and first release layer. The unwind unit is adapted to allow the laminate to be unwound from the roll. A first release layer discard unit is provided. The first release layer discard unit is adapted to remove the first release layer from the laminate. The laminating module includes a first pressing unit. The first pressing unit is adapted to press the film onto the surface. Here, the retaining means is adapted to resist a pressing force applied by the first pressing unit and acting to move the laminating module away from the surface. As the transportation module automatically drives the laminating module over the surface, the pressing unit presses the film to the surface.

Advantageously, the laminating system enables large surfaces to be laminated in a series of steps. The retaining means prevents the laminating module from moving relative to the surface so that a separate stand or fixture for supporting the surface is not required. Since the drive means enables the laminating module to be automatically driven over the surface, the process can be automated so that the laminating system can operate autonomously and the laminating process factors more precisely controlled.

A second release layer discard unit to remove a second release layer is provided where suitable. However, it will be appreciated that the requirement for first and second release layer discard units are dependent on the laminate construction the system is intended for use with. If no release layers are used with the laminate, the release layer discard units are unused or not required in the system. First and second release layer discard units are provided where necessary. Certain embodiments have a release layer discard unit and suitably two. In certain embodiments, each release layer discard unit is suitably a wind-up roller. Each wind-up roller is mounted to a frame of the laminating module in a rotatable configuration. Here, the end of the release layer is attached to the wind-up roller. As the wind-up roller rotates, the respective release layer is wound onto the wind-up roller. As is known in the art, peeling knives may be used to peel each release layer from the laminate.

In certain embodiments, the unwind unit is adapted to receive a roll of laminate. The unwind unit mounts the roll of laminate in a rotatable configuration relative to the laminating module. In certain embodiments, the laminating module includes a frame and the unwind unit mounts the laminate roll to the frame so that the laminate roll can be rotated to unwind the laminate therefrom. Suitably a laminate delivery system transfers the laminate from the laminate roll to the first pressing unit. In certain embodiments, the laminate delivery system comprises a series of rollers for guiding the laminate. Advantageously, the laminate delivery system includes a moveable guide. The moveable guide is arranged to guide the laminate between the surface and first pressing unit prior to laminating. The laminate may be fed between the moveable guide and pressing surface initially. Suitably, the moveable guide is deployed to nip the laminate against a pressing surface of the first pressing unit. The moveable guide and pressing surface are then arranged to move simultaneously so that the nip moves from a first position to a second position, wherein in the second position, the laminate is arranged under the pressing unit.

In certain embodiments, the first pressing unit is arranged so that the laminate is guided at least partially between a pressing surface of the first pressing unit and the surface being laminated. In certain embodiments, the first pressing unit is mounted to a frame of the laminating module. The pressing unit may be mounted to the frame in a fixed configuration, wherein the pressing surface protrudes from a bottom plane of the transportation module and is therefore arranged to contact and compress against the surface being laminated when the laminating system is arranged on the surface. Here, the resiliency of the pressing surface provides a pressing force for the laminating process. Alternatively, the retaining means may include an actuator to move the laminating module relatively towards or away from the surface, wherein the laminating module is moved towards the surface to compress the pressing surface against the surface to provide the laminating pressure. However, in certain embodiments, it is suitable for the first pressing unit to include an actuator to move the pressing surface relative to the frame so as to provide the pressing force as required for the laminating process. Advantageously, the actuator range can be increased so as to move the pressing surface clear of the bottom plane of the transportation unit so that the laminating system can be moved with reduced risk of damaging the pressing surface.

In certain embodiments, the pressing surface is an endless surface. In certain embodiments, the endless surface is formed about a single core. Here, the endless surface is a roller. The roller is mounted relative to a frame of the laminating module by bearings and so as to rotate about a central axis. It will be appreciated that where the pressing unit includes an actuator, the actuator moves the bearing relative to the frame. The pressing surface is an external surface of the roller and rotates about the axis of the roller.

Suitably, the pressing surface of the first pressing unit is deformable. That is the surface spreads as it is compressed onto the surface. Here, when the pressing surface is a roller, the deformation of the pressing surface enlarges the surface contact area. Suitably therefore the hardness of the pressing surface is controlled to optimize the pressing of the laminate to the surface in response to a set pressing force, and in particular if the surface includes surface imperfections. Advantageously, the pressing surface comprises an open cell structure. For instance, in certain embodiments, the pressing surface is formed as an Ethylene Propylene Diene Monomer (EPDM) open cell rubber on a roller core. It is believed the open cell structure is beneficial over a closed cell structure with a similar hardness as it allows better stretch across and along the roller.

In certain embodiments, the laminating module includes a heating means. The heating means is used to supply heat to the laminating process as required. In certain embodiments, the heating means comprises a first heater. The heater is arranged parallel to the pressing surface and across the full width of the pressing surface. For instance, where the pressing surface is a roller, the first heater is arranged parallel to the axis of the roller. In certain embodiments, the heater is arranged in front of the pressing surface relative to the direction of lamination. Suitably, the heater is directed to radiate heat towards the surface to be laminated and at a location in front of the pressing surface. Suitably, the first heater additionally or alternatively radiate heat towards the laminate before it is guided between the surface and pressing surface. Here, the first heater is arranged to pre-heat the surface being laminated and to pre-heat the laminate before being pressed by the first pressing unit. In certain embodiments, a second heater is provided. The second heater is similar to the first but arranged behind the pressing surface. Here the second heater is arranged to radiate heat to the laminated surface. The second heater being arranged to heat the laminate to stress relieving temperatures.

Single pressing units laminate flat, uniform surfaces adequately. However, where the surface includes surface imperfections such as rivets or weld seams as found on a ship's hull, the laminate has been found to form voids around the surface imperfections. Whilst each void could be post processed individually by piercing to allow air to escape and then re-heating and pressing the laminate to stretch into the void, this is time consuming and the laminate can overstretch. Advantageously therefore, certain embodiments show a second pressing unit. The second pressing unit is provided on the laminating module and behind the first pressing unit relative to the laminating direction. Hence, the second pressing unit post processes the laminate pressed by the first pressing unit in a single operation. That is, the second roller presses the laminate pressed by the first roller in a single movement of the transportation module. In certain embodiments, a heating means is provided. The heating means suitably comprises a heater arranged in front of the second pressing unit to pre-heat the laminate. Suitably, said heater heats the laminate to a temperature where the laminate becomes weak and flexible. In certain embodiments, said heater is arranged between the first and second pressing units and may therefore comprise the second heater. In certain embodiments, the heating means comprises a heater arranged to radiate heat to the laminate behind the second roller. For instance, the heater is a third heater that heats the laminate pressed by the second pressing unit. Suitably, the third heater heats the laminate to a stress relieving temperature. In certain embodiments, the second pressing unit is substantially as described in relation the first pressing unit. Furthermore, each heater is substantially as described in relation to the first heater.

It will be appreciated that cutting blades and other equipment known in the art may be added to the laminating system to automate the system. Also a surface cleaner may be arranged in front of the first pressing unit to clean the surface. For instance, an air-blade creating a jet of air to remove debris is envisaged. However, according to certain embodiments there is provided a laminating system that can laminate large areas, even with surface imperfections such as bolts or rivets. Here, the retaining means and drive means of the transportation module combine to enable automatic lamination of the large surface, even where the laminating system can only access on side of the large surface.

In certain embodiments, the retaining means is a selectable between an operating function, wherein the retaining means acts to retain the transportation module against the surface and a non-operating function, wherein the transportation module is not retained against the surface. Suitably, the retaining means does not employ fixings on the surface. For instance, the retaining means does not bolt or otherwise fasten to the surface. In certain embodiments, the retaining means cooperates with the surface to generating the retaining forces. Here, suitably, the retaining means comprises a magnetic attraction between the transportation module and the surface. Suitably, the surface being laminated is a ferrous material and the transportation module includes a magnet.

In certain embodiments, the retaining means and drive means is provided as a guiding frame wherein the laminating module comprises a shuttle able to be driven along the frame by the drive means. Here the system laminates a strip on the large surface along the length of the guiding frame. The transportation module includes the frame adapted to carry the shuttle forming the laminating unit, wherein the drive means causes the shuttle to move relative to the frame. In certain embodiments, the retaining means secures the frame fast to the surface. Advantageously, the retaining means creates a magnetic force. Suitably, the surface being laminated is ferrous and the retaining means creates a magnetic attraction between the frame and surface. The magnetic attraction is sufficient to resist the pressing force of the pressing units. Moreover, in certain embodiments, the frame is mounted in a vertical arrangement, and the magnetic attraction is sufficient to maintain the relative position of the frame on the surface against the gravitational forces acting on the laminating system.

In certain embodiments, the driving means and retaining means are provided by magnetic rollers, such as magnetic wheels. The magnetic rollers provide a magnetic attraction to a ferrous surface. The magnetic rollers are mounted to the laminating module. The magnetic attraction acts to prevent the laminating module from separating from the surface. For instance, the magnetic attraction is sufficient to overcome any pressing forces from the pressing units. Additionally, the magnetic attraction is advantageously sufficient to prevent the laminating system from moving relative to the surface under gravitational forces when the system is mounted vertically. Each magnetic roller is arranged to be driven about an axle. Here, rotation of the magnetic roller enables the laminating module to move along the surface without interfering with the ability of the magnetic wheels from adhering to the surface.

In certain embodiments, there is also provided a laminating method. The laminating method comprises using a transportation module to drive a laminating module over a surface to be laminated. The transportation module includes a drive means and retaining means and the method comprises using the transportation module to retain the laminating module relative to the surface. In certain embodiments, the laminating method comprises operating the laminating system to laminate a first stripe of the surface, repositioning the laminating system, and carrying out a second laminating process to laminate a second stripe of the surface adjacent the first stripe.

The method may include laminating the first and second stripes adjacent to each other so that the edges of each stripe abut, or so that the edges overlap. However, the laminating method may include applying a material to fill any gap between the adjacent edges of each stripe. For instance, the method may comprise the step of applying a paint to fill any gap between the laminating stripes. Here, the laminating system may include an edge sealer station. The edge sealer station is arranged on the laminating module or transportation module to automatically apply the material to fill the gap as the laminating system operates. The edge sealer station may comprise an applicator such as a brush, roller or spray to apply the material as the laminating module moves.

The method may include a cleaning or drying step prior to applying the laminate. Here, the laminating system may include a nozzle for directing an air stream to the surface. The air stream or air blade can remove debris and contaminants as well as disperse fluid such as rain droplets. It is envisaged the nozzle would direct the air onto the surface in front of the laminating system and close to the first pressing unit. The nozzle may therefore be attached to the laminating module or transportation module.

It will be appreciated that whilst the second pressing unit and associated heaters are particularly useful for laminating large surfaces wherein the laminating module is driven by a transportation module having retaining means and driving means to drive the laminating module over the surface, the second pressing unit is an advantageous development to other laminating systems where surfaces with irregularities need to be laminated. For instance, a lamination process using a laminating machine where the surface is moved through the laminating machine. Here, instead of driving the laminating module along the surface, the lamination module is fixed relative to a frame of the laminating machine. Using such machines to laminate an irregular surface can be improved by adding a second pressing unit, wherein the second pressing unit is as previously described. There is therefore provided a laminating system comprising an unwind unit, a first pressing unit and a second pressing unit. The unwind unit is adapted to receive a roll of laminate. A laminate delivery system guides the laminate unwound from the roll under the first pressing unit. The first pressing unit is arranged to press the laminate to the surface. The second pressing unit is located behind the first pressing unit relative to the laminating direction. The second pressing unit is adapted to press the laminate to the surface. The laminating system includes heating means to heat the laminate prior to the second pressing unit.

According to a further aspect a laminating module comprises an unwind unit that is adapted to receive a roll of laminate. A pressing station is arranged to press the laminate against the surface to be laminated. A heating means is provided and arranged to apply heat during a laminating process. Here, the pressing station comprises a first pressing unit and a second pressing unit spaced from the first pressing unit. The heating means comprises a first zone to pre-heat an area forward of the first pressing unit; a second zone to heat the laminate pressed to the surface by the first pressing unit forward of the second pressing unit; and a third zone arranged to heat the laminate behind the second pressing unit relative to the laminating direction. It will be appreciated that the laminating module may be combined with other features of the embodiments and aspects herein described except where those features are mutually exclusive. There is also provided a corresponding method of laminating comprising applying a pre-heat before pressing a laminate to a surface using a first pressing unit, applying a second heat to heat the laminate pressed to the surface by the first pressing unit and subsequently using a second pressing unit to further press the laminate against the surface.

According to a yet further aspect a laminating module comprises an unwind unit adapted to receive a roll of laminate and a pressing station arranged to press the laminate against the surface to be laminated. The pressing station includes a first pressing unit. Here a laminate delivery system is provided. The laminate delivery system includes a moveable guide arranged to apply a nip against a pressing surface of the first pressing unit (240), the moveable guide being arranged to move simultaneously with the pressing surface to transfer the nip from one side of the pressing unit to another relative to the direction of laminating. Suitably, the moveable guide is a boom that extends across a width of the pressing surface. The moveable nip primes the pressing unit ready for laminating. Once laminating, the moveable nip is removed and returned to the other side of the pressing unit ready to reapply a nip for subsequent laminating steps once the laminate has been cut at the end of a laminating run. Again, it will be appreciated that the laminating module may be combined with other features of the embodiments and aspects herein described except where those features are mutually exclusive. There is also provided a corresponding method of laminating comprising feeding a laminate between a guide and pressing surface of a first pressing unit and moving the guide towards the pressing surface to nip the laminate against the pressing surface. The method comprises moving the guide simultaneously with the pressing unit to transfer the nip from one side of the pressing unit to another side of the pressing unit relative to the direction of laminating.

As used herein, the singular includes the plural and plural encompasses singular, unless specifically stated otherwise. For example, the use of the singular, i.e. "a" or "an", includes "one or more". In addition, as used herein, the use of "or" means "and/or" unless specifically stated otherwise, even though "and/or" may be explicitly used in certain instances.

The following statements of invention further define the invention.

### Clauses

1. A laminating system (30) comprising a laminating module (200) and a transportation module (100) wherein the transportation module (100) is arranged to drive the laminating module (200) over a surface (10) to be laminated; wherein
   the transportation module (100) includes a retaining means and a drive means, wherein the retaining means generates a magnetic force and the magnetic force acts to retain the laminating module (200) relative to the surface (10) so as to resist movement of the laminating module (200) relative to the surface (10) except when urged to move in a laminating direction by the drive means; and
   the laminating module (200) comprising an unwind unit (210) adapted to receive a roll of laminate (20) and a first pressing unit (240) arranged to press the laminate (20) against the surface (10) to be laminated;
   wherein the transportation module (100) comprises magnetic wheels (136), the magnetic wheels being arranged to be driven to rotate to both act as the driving means and the retaining means.
2. The laminating system (30) of clause 1, wherein the laminating module (200) includes a second pressing unit (250), spaced from the first pressing unit (240) in the laminating direction.
3. The laminating system (30) of any preceding clause wherein each pressing unit (240, 250) comprises a pressing surface (242), wherein the pressing unit is arranged to press the pressing surface against the surface (10) being laminated.
4. The laminating system (30) of clause 3 wherein the pressing surface (242) has a hardness selected so that the pressing surface deforms against the surface (10) being laminated.
5. The laminating system (30) of clause 3 or clause 4, wherein each pressing unit (240, 250) includes an actuator (246) to apply a pressing force to the pressing surface (10).
6. The laminating system (30) of any of clauses 2 to 5, wherein the laminating module (200) comprise heating means, the heating means forming a first zone (262) arranged to pre-heat the area in front of the first pressing unit (240) relative to the laminating direction, and a second zone (264) to heat the laminate between the first and second pressing units and, optionally, a third zone (266) arranged to heat the laminate behind the second pressing unit (250) relative to the laminating direction.
7. The laminating system (30) of any preceding clause, wherein the laminating module (200) includes a moveable guide arranged to apply a nip against a pressing surface of the first pressing unit (240), the moveable guide being arranged to move simultaneously with the pressing surface to transfer the nip from one side of the pressing unit to another relative to the direction of laminating.
8. A method of laminating a surface (10) using a laminating system (30) according to any preceding clause, the method comprising;
   arranging a transportation module (100) on the surface (10) to be laminated using a retaining means of the transportation module to anchor the transportation module by magnetic interaction of the retaining means and surface,
   causing the transportation module (100) to drive a laminating module (200) relative to the surface in a laminating direction whilst restricting relative movement in other directions by rotating magnetic wheels of the transportation module;
   completing a first laminating step by pressing a laminate against the surface whilst causing the relative movement of the laminating module and surface; and
   repositioning the transportation module to complete a second laminating step.
9. The method of clause 8, wherein the laminate comprises a thermoplastic substrate and a fouling release and/or anti-fouling coating layer applied thereto.

For a better understanding of the invention, and to show how embodiments of the same may be carried into effect, reference will now be made, by way of example, to the accompanying diagrammatic drawings in which:
Figure 1 shows a laminated surface having surface irregularities;
Figure 2 shows a void created when laminating a surface irregularity;
Figure 3 is a schematic perspective view of a laminating system of an exemplary embodiment;
Figure 4 shows views of a frame for use with the exemplary embodiment of figure 3, wherein figure 4a is a plan view and figure 4b is a side view;
Figure 5 shows a schematic perspective view of a corner of the frame of Figure 4 in more detail including retaining means;
Figure 6 shows an end of the frame of Figure 4 in more detail including a drive means;
Figure 7 shows a schematic perspective view of an alternative embodiment of a laminating system;
Figure 8 shows a perspective view of a laminating module of an exemplary embodiment;
Figure 9 shows a perspective view of the laminating module of Figure 8 from the other side and with a protective cover removed;
Figure 10 shows a schematic side cross-sectional view of the exemplary laminating module;
Figure 11 shows a cross-sectional perspective view of a region of the laminating module of Figure 8 including a peeling knife;
Figure 12 shows a perspective view of a pressing roller according to an exemplary embodiment;
Figure 13 shows an perspective view of an exemplary heating element; and
Figure 14 shows schematic views detailing an exemplary laminating process.

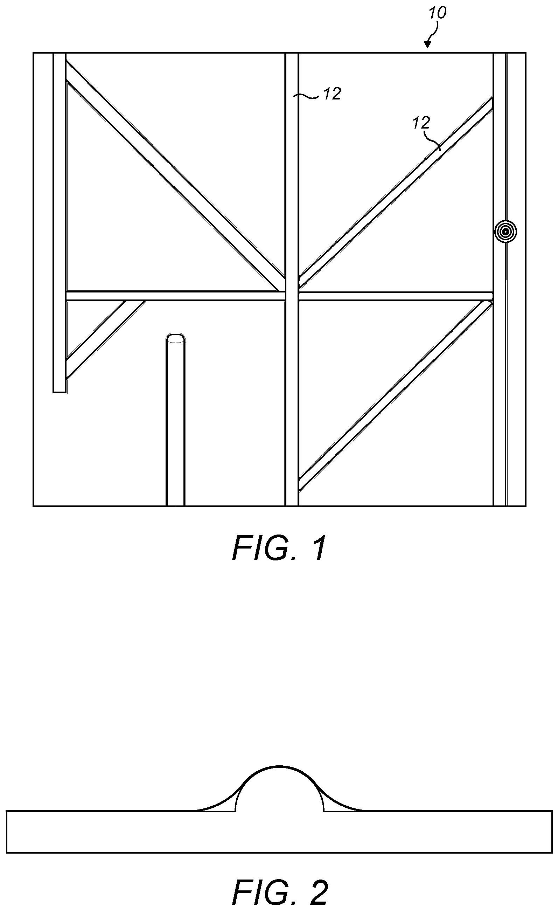

Referring to figure 1, a surface 10 is shown with a laminated stripe, wherein the laminated stripe is a laminate 20 having been bonded to the surface 10 during a laminating process. The surface 10 is shown as having surface irregularities 12. The surface irregularities are typical of weld seams and rivets as found on the hull of a ship. The laminating process needs to be completed after the ship has been constructed and the surface is therefore large with access to only one side. Moreover, the surface is typically vertically orientated. Here, vertically orientated or vertical surface includes surfaces arranged in a generally upstanding direction, including sloped surfaces. The exemplary embodiments provide a system and method for automatically laminating the surface in a series of adjacent laminating steps and in particular to a system and method for reducing the voids around surface irregularities.

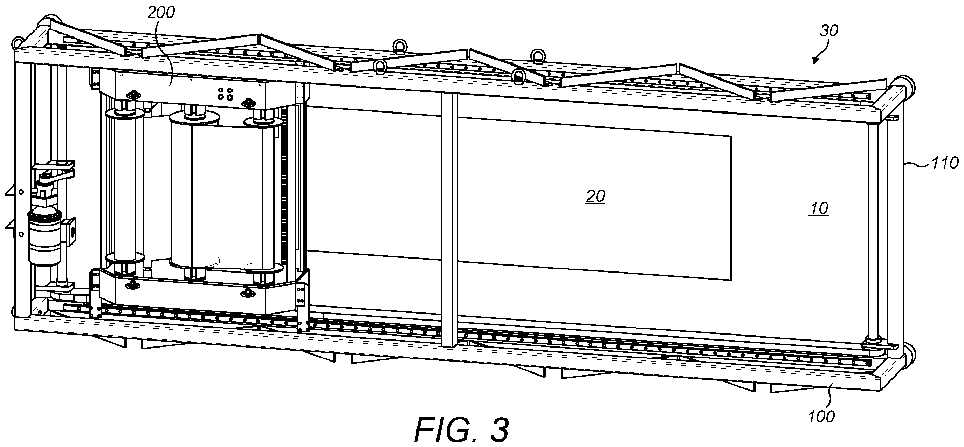

Referring to Figure 3, a laminating system 30 is shown. The laminating system 30 comprises a transportation module 100 and a laminating module 200. The transportation module is arranged to drive the laminating module over the surface 10 to complete a lamination step and to form a stripe of lamination on the surface. Here, because the surface is larger than the laminating system, the laminating stripe covers only a portion of the surface. The laminating system is then re-positioned, before second and subsequent laminating steps are completed to lay adjacent stripes of laminate to cover the surface 10. The transportation module 100 includes a drive means and a retaining means. The retaining means is adapted to resist relative movement of the laminating module and surface. The drive means is arranged to drive the laminating module over the surface, wherein the retaining means does not prevent the relative movement of the laminating module and surface caused by the drive means.

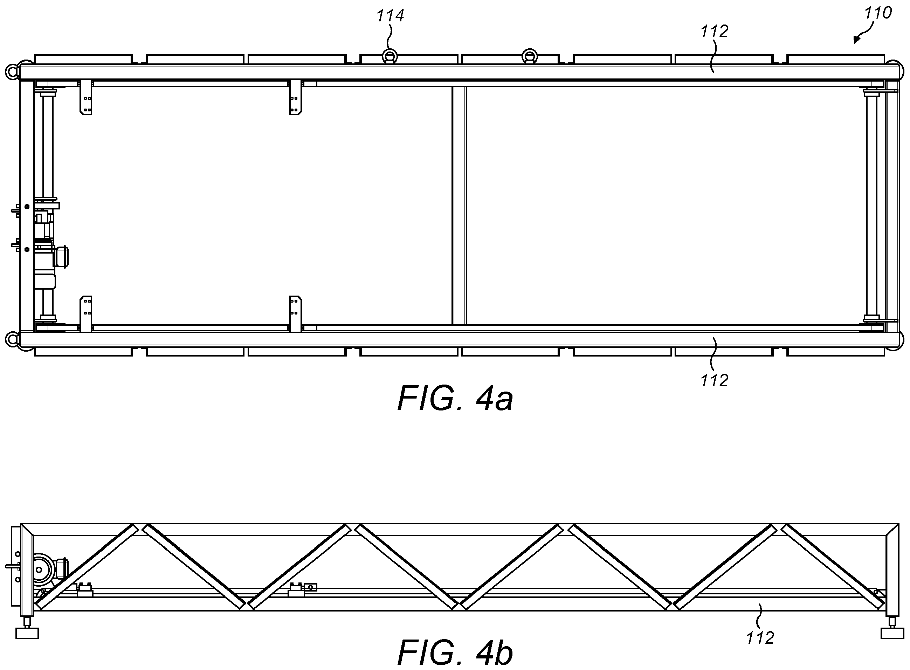

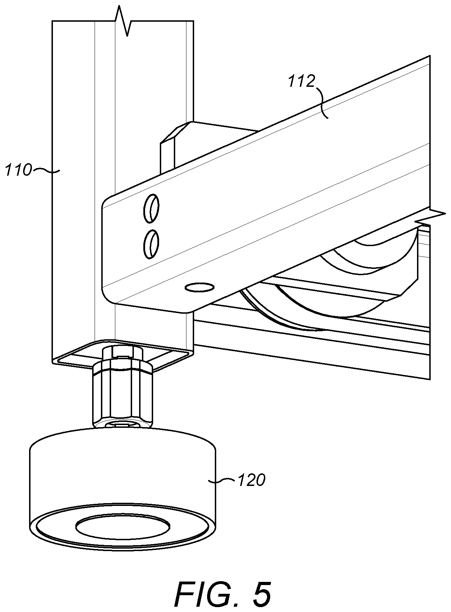

In Figure 3, the transportation module 100 is suitably shown as a guiding frame 110. The guiding frame is arranged to carry the laminating module 200 as a shuttle. The laminating module is therefore elongate in the laminating direction and the length of the frame 110 delimits a length of each laminating stripe before the transportation module 100 is repositioned. Referring to Figure 4, the frame is generally rectangular having rails 112 along each long side upon which the shuttle travels. Lifting hooks 114 or other transportation fixings are formed fixed to the frame to enable the frame to be moved and repositioned. The frame 110 is fixed to the surface by the retaining means. The retaining means may be any suitable fixing method to secure the frame to the surface. As shown in Figure 5, suitably the retaining means are a plurality of mounting feet 120. The frame is shown in Figure 4b as having four mounting feet, one on each corner of the frame 110. However, it will be appreciated that the number of mounting feet is determined by the support required by the frame. More feet may therefore be provided, particularly along the length to retain the rails more directly. The feet 120 may suitably be extendible so that the feet can be adjusted to compensate for surface flatness. In the exemplary embodiments, the feet 120 are temporarily fixed to the surface through magnetic attraction. As shown in Figure 5, the distal ends of the feet 120 may therefore include a magnet such as an electro magnet. The elector magnetic forces clamp the frame 110 to a ferrous surface and provide a stationary guiding frame for the laminating module.

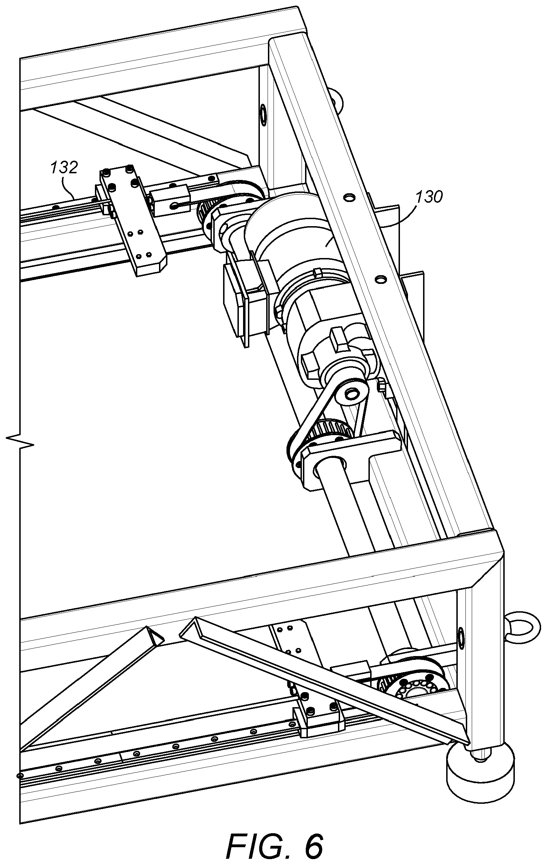

As shown in Figure 6, the drive means is suitably shown as an actuator for moving the laminating module mounted as a shuttle relative to the frame. Here, the shuttle runs on the rails 112 of the frame and the actuator acts between the frame and shuttle. In Figure 6, the actuator is shown as a motor 130 driving a timing belt 132 to which the shuttle is attached. However, other actuators such as pistons or gears would also achieve the required driving force. The speed at which the shuttle is driven along the frame is a factor of the laminating process and can be controlled by controlling the actuator. Typically the shuttle might be driven along the frame between 1.2m/min and 8.0m/min.

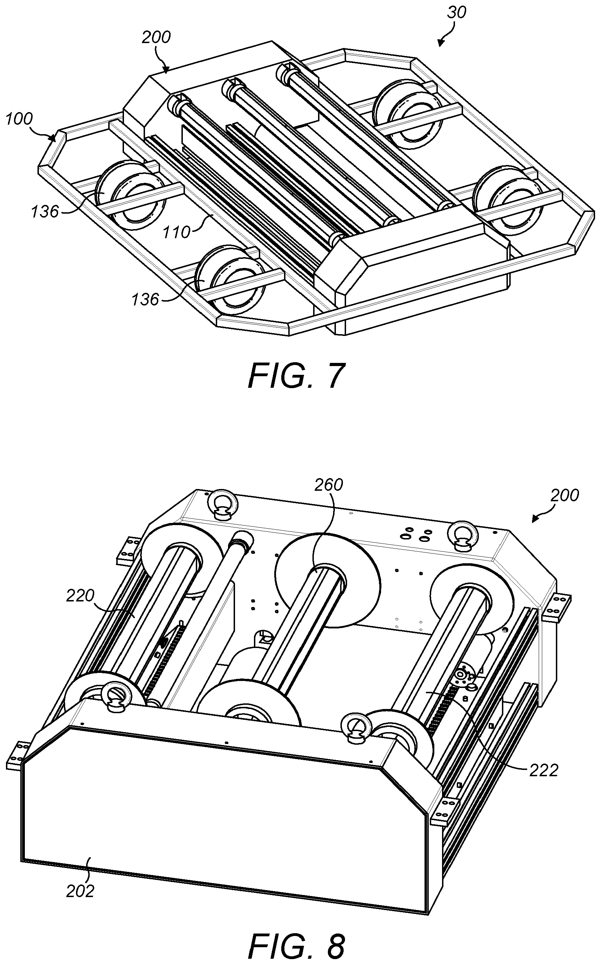

Figure 7 shows an alternative exemplary embodiment of a laminating system 30. Here, the laminating module is fixed relative to a frame 110 of a transportation module 100. The transportation module 100 includes drive means to drive the laminating module over the surface to complete a laminating step and retaining means to restrain the laminating module from moving relative to the surface. In this embodiment, the retaining means and driving means are provided integrally as magnetic rollers 136. The magnetic rollers secure to a ferrous surface through magnetic attraction. The magnetic rollers are driven about their axis to roll over the surface whilst maintaining the magnetic attraction there between whilst restricting other relative movement. The exemplary embodiment is shown with four magnetic rollers. However any number of magnetic rollers is envisaged to provide a stable platform for the laminating module. Furthermore, the magnetic rollers are shown as magnetic wheels symmetrically arranged, but other configurations are envisaged and the rollers 136 may be arranged within the laminating stripe or to one side or a combination thereof.

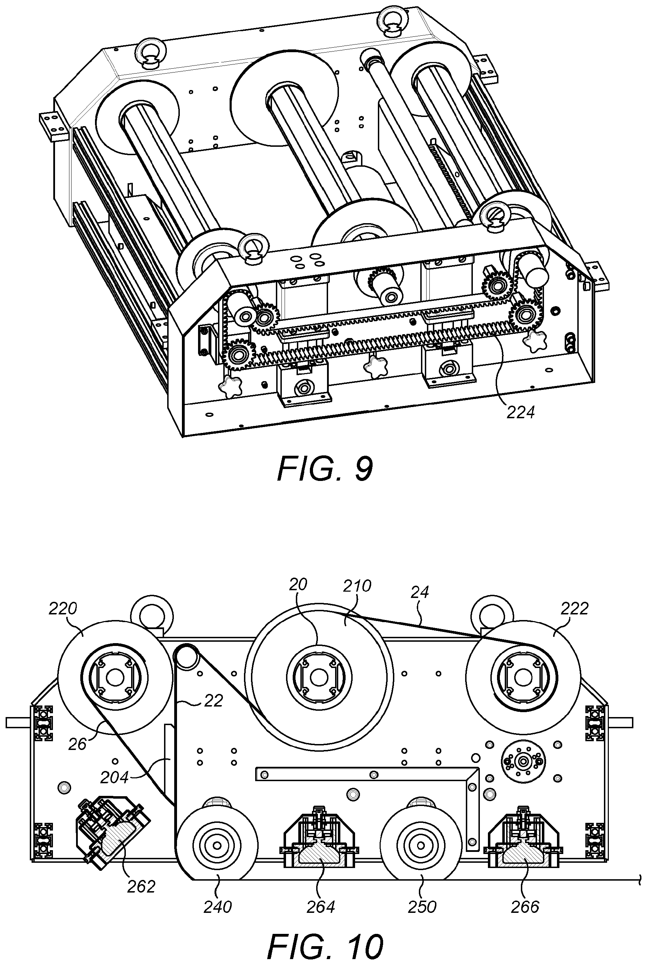

The laminating module 200 presses a laminate to the surface to complete the laminating step. Referring to Figure 8, in the exemplary embodiments, the laminating module 200 includes an unwind roller 210. The unwind roller 210 receives a roll of laminate 20. The unwind roller 210 is mounted to a frame 202 of the laminating module in a rotatable configuration. Here the unwind roller rotates about its central axis to unwind the laminate. The laminate may include lower and / or upper release layers. Optional release layer discard units are therefor provided to remove the discard layers prior to the lamination. As shown in Figure 8, a first release layer discard unit 220 is provided. As shown, suitably, the discard unit is an empty shaft that is mounted to the frame 202 and able to rotate thereto. The lower release layer is separated from the laminate and attached to the shaft. The shaft is caused to rotate to wind-up the release layer as the laminate is laid. A second release layer discard unit 222 is provided in a similar manner to wind-up the upper release layer. As is shown in Figure 9, the shafts of each release layer discard unit (not shown) may be driven by a motor and timing belt 224 to rotate and brakes and other tensioning means may be applied as is known in the art to maintain a correct tension of the release layers.

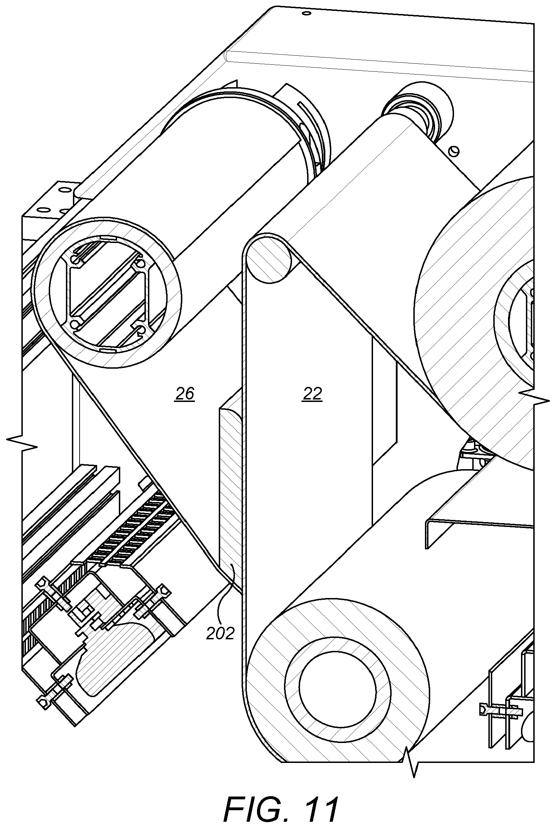

Figure 10 shows the guide path of a laminating module according to an exemplary embodiment. Here the laminate comprises a self-adhesive laminate 22 and upper 24 and lower 26 release layers. The upper release layer is pulled directly from the laminate roll. The self-adhesive laminate 22 and lower release layer protecting the self-adhesive is guided by laminate guide means towards pressing stations that press the laminate to the surface. Prior to the first pressing operation, the lower release layer 26 is peeled from the self-adhesive laminate. Here, suitably a peeling knife 204 is provided. As shown in Figure 11, the peeling knife 202 comprises a beam extending across the laminate 20 and forming a bevelled edge against which the lower release layer is arranged to bear. The bevelled edge acts to pull the lower release layer against the direction of movement of the laminate. The self-adhesive laminate includes a thermoplastic substrate to which the self-adhesive layer and other coatings and surface preparations are applied. The thermoplastic substrate is suitably a Polypropylene sheet. Advantageously, the thermoplastic substrate can be heat treated to soften and more easily deform over surface irregularities.

In the exemplary embodiments, the laminating module 200 includes a pressing station to press the laminate on to the surface. The pressing station includes a pressing surface over which the laminate is passed. In the exemplary embodiments, the pressing surface is shown as a first and second pressing rollers 240, 250. Whilst one roller is able to laminate flat surfaces it has been found that the second roller acts to reduce void formation around surface irregularities as compared to a single roller. The second pressing roller 250 is spaced behind the first pressing roller 240 in the direction of lamination. An automatic feeding boom is provided in the exemplary embodiments to nip the laminate against the pressing surface. By moving the boom in registration with the pressing surface, the nip can be moved underneath the pressing surface ready for a lamination step. The nip can be released to carry out the laminating step before the automatic feeding boom is reset ready for the next laminating step.

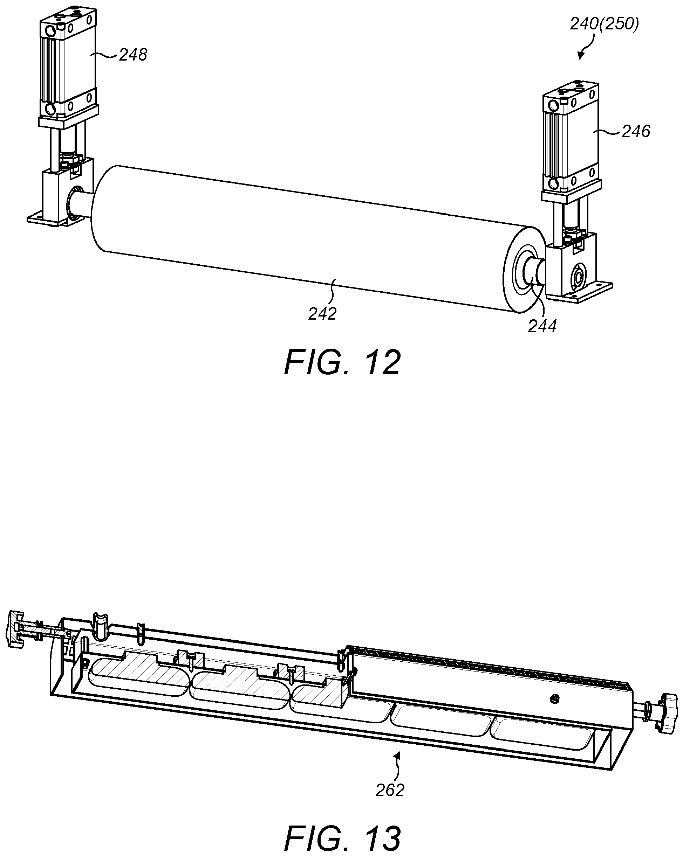

Each pressing roller 240, 250 can be explained with reference to Figure 12. The pressing roller 240 includes a pressing surface 242 formed as a continuous surface that is arranged as a roller to rotate and press the laminate to the surface. A pressing force is applied to the pressing surface 242. In the exemplary embodiments, the pressing force is applied by an actuator that acts between a frame 202 of the laminating module and rotational shaft 244 of the pressing surface to move the pressing surface towards and away from the frame. The actuator may have a large range of travel so as to advantageously withdraw the pressing surface during transportation. The actuator is arranged to apply a set pressing force and the pressing force can be controlled by controlling the actuator. As shown in Figure 12, in the exemplary embodiments, a first 246 and second 248 actuator is provided at either side of the shaft 244.

In the exemplary embodiments the pressing surface 242 of each pressing unit is deformable. That is, the hardness of the pressing surface is selected so as to deform under the pressing force. In the exemplary embodiments comprising a pressing roller, the pressing surface hardness is selected to deform and flatten. Suitably, the pressing surface is formed from an open cell structure, as it has been found that an open cell material more readily deforms in both the axial direction and laminating direction. The open cell structure may form cells in the range of 0.5mm and 0.2mm in diameter.

Referring back to Figure 10, the laminating module of the exemplary embodiments includes heating means. The hearing means 260 heats the laminate and / or surface being laminated. In the exemplary embodiments, the heating means is formed into three zones. A first zone preheats the surface being laminated and preheats the laminate prior to the first pressing unit. Here a first strip heater 262 is provided across the width of the laminate. The strip heater 262 is angled to the surface being laminated so as to radiate heat directly to both the surface and laminate. Here, the laminate is guided towards the first pressing unit in a direction substantially perpendicular to the surface. Other configurations are envisaged and may require the first strip heater to be formed in two modules with each module directing heat to the surface and laminate respectively. The second zone is provided between the first and second pressing units. Again the zone may be formed by a second strip heater 264. The second strip heater extends across the width of the laminate and heats the laminate to a temperature where the laminate becomes weak and flexible in preparation for the second pressing step. The third zone is to trail the second pressing unit. The third zone may be formed from a third strip heater arranged to heat the laminate to stress relieving temperatures.

Figure 13 shows an exemplary strip heater used as strip heaters 262, 264, 266. It will be appreciated that the strip heaters can be controlled to precisely control the temperature of each zone. Glass shortwave heating elements are used to achieve the exemplary heating characteristics.

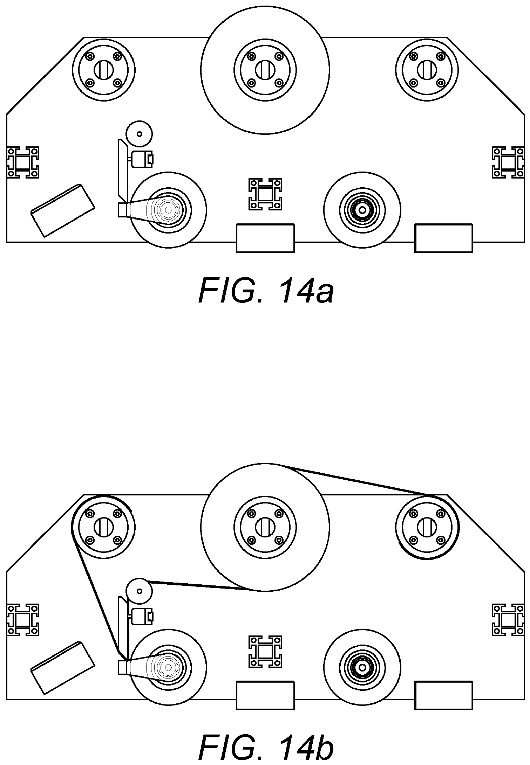

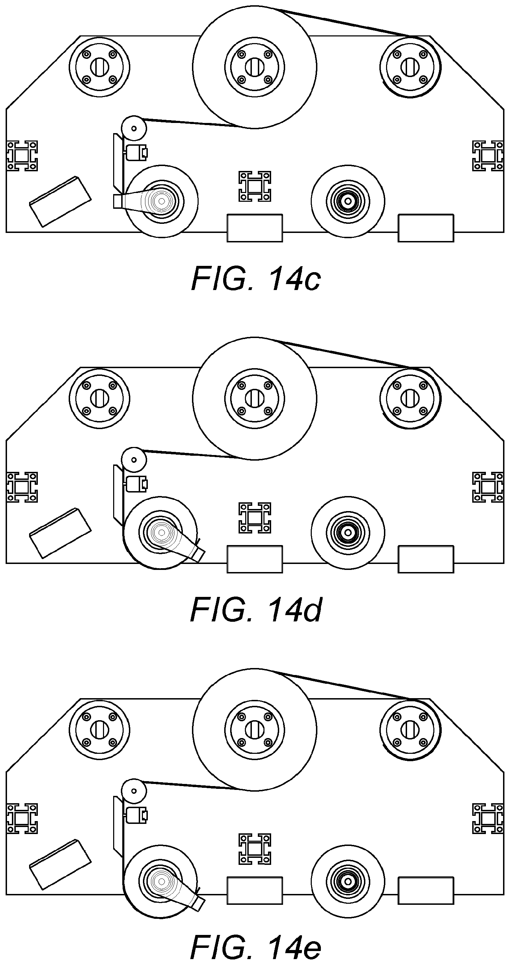

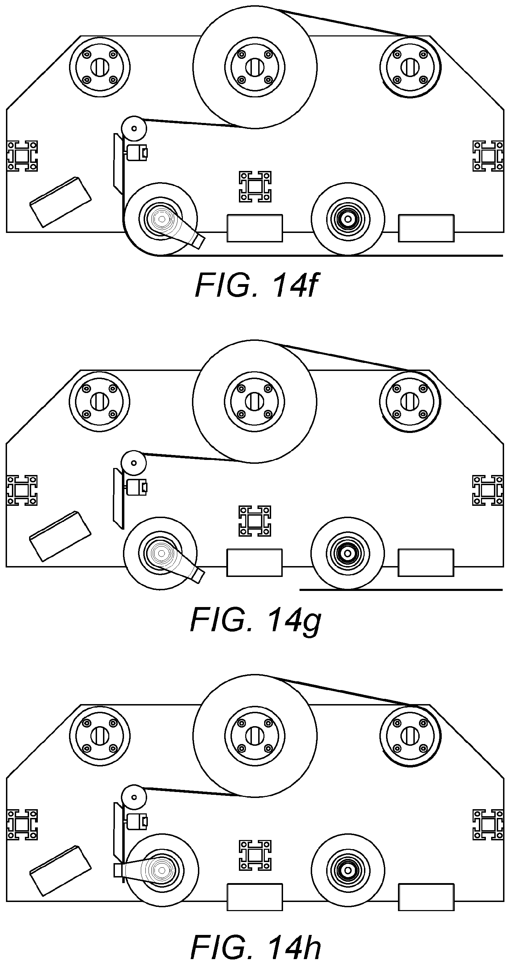

The exemplary laminating process will now be described with reference to Figure 14. A laminate roll is loaded onto unwind unit 210. Empty shafts are loaded onto release layer discharge units 220, 222. The top release layer is peeled from the laminate 20 and fixed to the empty shaft of discharge unit 222. The laminate is guide through the laminating module to the peeling knife 204. A cutting knife may also be provided at the peeling knife to cut through the self-adhesive laminate but suitably not the lower release layer. The lower release layer is peeled from the self-adhesive laminate and fixed to the shaft of the discard unit 220. The lower discard layer acts against the peeling knife to travel backwards against the direction of travel of the self-adhesive laminate. The self-adhesive laminate is fed between the boom and pressing surface and the nip applied. The first pressing roller and boom are moved in registration about the axis of the roller. The self-adhesive laminate is therefore fed automatically underneath the pressing roller. The transportation unit is arranged on the surface to be laminated. The first and second pressing units are lowered to press the pressing surfaces against the surface. The nip can then be removed from the pressing roller. The transportation unit is operated to drive the laminating module over the surface. When the laminating module completes the laminating stripe, the self-adhesive laminate is cut. The first and second pressing units are raised, the nip reapplied and the transportation unit re-positioned. A second and subsequent laminating step can then be completed.

Although certain embodiments have been shown and described, it will be appreciated by those skilled in the art that various changes and modifications might be made without departing from the scope of the invention, as defined in the appended claims.

## Claims

1. A laminating module (100) comprising:
an unwind unit (210) adapted to receive a roll of laminate (20);
a pressing station arranged to press the laminate (20) against the surface (10) to be laminated; and
a heating means adapted to apply heat during a laminating process;
**characterised in that**
the pressing station comprises a first pressing unit (240) and a second pressing unit (250) spaced from the first pressing unit (240); and
the heating means comprises a first zone (262) to pre-heat an area forward of the first pressing unit (240);a second zone (264) to heat the laminate pressed to the surface by the first pressing unit (240) forward of the second pressing unit (250); and a third zone (266) arranged to heat the laminate behind the second pressing unit (250) relative to the laminating direction.

2. A laminating system comprising the laminating module (200) of claim 1 and a transportation module (100), wherein the transportation module (100) is arranged to drive the laminating module (200) over a surface (10) to be laminated; and
the transportation module (100) includes a retaining means and a drive means, the retaining means interacting with the surface so as to resist movement of the laminating module (200) relative to the surface (10) except when urged to move in a laminating direction by the drive means.

3. A method of laminating comprising applying a pre-heat before pressing a laminate (20) to a surface (10) using a first pressing unit (240), applying a second heat to heat the laminate pressed to the surface by the first pressing unit (240) and subsequently using a second pressing unit (250) to further press the laminate (20) against the surface (10).

4. A laminating module (100) comprising:
an unwind unit (210) adapted to receive a roll of laminate (20);
a pressing station arranged to press the laminate (20) against the surface (10) to be laminated and comprising a first pressing unit; and
a laminate delivery system including a moveable guide arranged to apply a nip against a pressing surface of the first pressing unit (240), the moveable guide being arranged to move simultaneously with the pressing surface to transfer the nip from one side of the pressing unit to another relative to the direction of laminating.

5. A laminating system comprising the laminating module (200) of claim 4 and a transportation module (100), wherein the transportation module (100) is arranged to drive the laminating module (200) over a surface (10) to be laminated; and
the transportation module (100) includes a retaining means and a drive means, the retaining means interacting with the surface so as to resist movement of the laminating module (200) relative to the surface (10) except when urged to move in a laminating direction by the drive means.

6. A method of laminating comprising:
feeding a laminate between a guide and pressing surface of a first pressing unit and moving the guide towards the pressing surface to nip the laminate against the pressing surface;
moving the guide simultaneously with the pressing unit to transfer the nip from one side of the pressing unit to another relative to the direction of laminating.
